# EUROPEAN PATENT APPLICATION

(11) **EP 4 382 492 A1**
(43) Date of publication of application: **12.06.2024**
(21) Application number: 22757345.8
(22) Date of filing: 21.07.2022
(51) Int. Cl.: C02F 1/36, C02F 103/00, C02F 103/42

(54) **ULTRASONIC WAVE ANTENNAS FOR THE ELIMINATION OF ALGAE AND MICROORGANISMS**

(30) Priority: 05.08.2021 ES 202130764
(71) Applicant: MIL-Waters, S.L., 10810 Morcillo (Cáceres) (ES)
(72) Inventor: VALENTIN TOVAR, Juan Raimundo, 10800 Coria (Caceres) (ES)
(74) Representative: Fernández-Pacheco, Aurelio Fernández
(86) International application number: PCT/IB2022/056747
(87) International publication number: WO 2023/012562

(57) **Abstract**

Ultrasonic wave antenna, the configuration of which enables the generation of the wave in all its amplitude from the emitting source. The positive peak and the negative peak are generated in the same interval and with the same amplitude, which comprises 1.- enamelled copper wire of 0.1mm to 0.2 and up to approximately 2000 and 4500 metres in length, 2.- hollow, cylindrical PVC tube of 20 mm 3.-cylindrical bar of ferrite or iron of 14 mm diameter and up to 250 cm in length, covering the entire length of the antenna. 4.- 32 mm PVC tube, white or similar colour. 5.- RG58 or RG59 cable, white or similar colour. 6.- side caps, of the same cross section. 7.- two-component hardening resin.

## Description

### PURPOSE OF THE INVENTION

The present descriptive report refers to an invention relating to an ultrasonic wave antenna, the configuration of which enables the full amplitude of the wave to be generated from the emitting source, with the positive and negative peaks being generated in the same interval and with the same amplitude, consisting of 1. - 0.1 mm to 0.2 mm enamelled copper wire up to approximately 2000 and 4500 metres in length, 2. - a hollow 20 mm PVC cylindrical tube, and 3. - a 14 mm diameter ferrite or iron cylindrical bar up to 250 cm in length, covering the full length of the antenna. 4.- PVC tube, 32 mm, white or similar colour. 5.- RG58 or RG59 cable, white or similar colour. 6.- side caps, of the same cross section. 7.- a two-component hardening resin.

### FIELD OF APPLICATION OF THE INVENTION

This invention is used in the water purification industry, or more specifically, in the elimination of algae and microorganisms from reservoirs, ponds and swimming pools. The elimination and inhibition of algae growth through the use of ultrasound waves avoids the use of chemicals and does not generate waste. It is therefore a clean technology, able to meet the legislative requirements of the environmental policy.

### BACKGROUND TO THE INVENTION

In the field of water treatment for reservoirs, ponds and swimming pools, the elimination of algae and microorganisms is a problem that used to be addressed by adding chemicals, such as potassium permanganate, copper sulphate, chlorine etc., to the water, in appropriate proportions, as established by the regulatory agencies. This method involved adding chemicals to the water that were not completely removed. Subsequently, the ultrasound method for removing algae was developed, and resulted in a recognised method of combating algae.

However, devices to date have had scientific and technical shortcomings, due to the fact that these various types of electronic device generate ultrasound waves over certain frequency ranges in such a way that behaviour, such as that of insects and rodents, can be altered. These sound waves are in frequency ranges not audible to the human ear, from 20 kHz up to several MHz.

To understand how ultrasound works, it is necessary to first understand how sound waves are generated and propagated. A sound wave is initiated in a generator source and is propagated by a mechanical vibration in an elastic medium such as air or water, with a propagation velocity of the sound waves that varies depending on the conductivemedium (340 m/s in air and 1,540 m/s in water). Generally speaking, the human ear is considered capable of perceiving sound waves at frequencies of between 20 Hz and 20 kHz (20,000 Hz). This determines a certain range of wavelength (λ) values of the sounds audible to the human ear, which range between 1.7 cm and 17 m. The frequency (f) of a sound wave is the number of oscillations that occur per unit of time and is measured in hertz (Hz); it is related to the wavelength: the higher the frequency the lower the wavelength. Therefore, there are two bands that are audible to the human ear: frequency waves below 20 Hz, known as infrasonic waves, which are emitted by some animals such as elephants and also generated in volcanoes and earthquakes, and those bands with frequencies above 20 kHz, known as ultrasonic or ultrasounds. The latter waves, of high frequency and short wavelength (between 20, 30 and 40 kHz), are the ones that have an application in sanitisation processes, thanks to their ability to produce the phenomenon known as cavitation.

The magnitudes and units that define a wave are:
Amplitude (A): the maximum height reached by the wave. It is measured in metres (m). Wavelength (λ): the distance that separates two maximum points of a wave. It is measured in metres (m).
Cycle or oscillation: path of each particle, from the start of a vibration to when it returns to the initial position, measured in metres (m).
Period (T): time that it takes for a particle to complete one full vibration (oscillation). It is measured in seconds (s).
Frequency (f): the number of oscillations of the vibrating particle per second. It measured in Hertz (Hz). Duration and frequency are related, f=1/T.

The applicant is in possession of the Utility Model No. 201500862, "CANNON PROBE OF ULTRASONIC WAVES FOR THE ELIMINATION OF ALGAE". Through the existing invention proposed, the cannon will be replaced by an antenna, given that, according to research carried out, it is much more effective with respect to durability over time as it does not produce any moisture due to the condensation that is produced in the cannons. The antenna is capable of of emitting a sine-wave underwater and at a different amplitude and frequency within one second, and with greater range, thus exceeding the effectiveness of ultrasound devices currently on the market. Its specific design achieves full efficiency in the elimination of algae.

### STATED TECHNICAL PROBLEM

Currently, in order to eliminate algae and microorganisms, different chemical products are used, leaving residues in the water that are difficult to eliminate.

Therefore, the invention proposed is based on the elimination of these algae, using a specific ultrasound antenna of suitable emitting power and frequency, in a manner that does not lead to risk or harm to other forms of life, but that does have a harmful effect on the algae, inhibiting it and preventing its formation

The current antenna, in its two forms, substantially improves the amplitude and frequency of the wave compared with current metal cannons, given that the cannons lose effectiveness when they become moist from condensation or when submerged more than 40 cm below the surface, because they usually work with piezoelectric loud speakers of a limited range of 400 metres, while the current antenna uses electrical wire and is not affected by these limitations, having a range of 4500 metres.

### DESCRIPTION OF THE INVENTION

The present invention refers to an antenna for the elimination of algae using ultrasound waves, the configuration of which enables the full amplitude of the wave to be generated from the emitting source, with the positive and negative peaks being generated in the same interval and with the same amplitude.

The antenna comprises:
1) enamelled copper wire, from 0.1 to 0.2 mm, and up to approximately 2000 and 4500 metres in length, which is wound in a coil along the hollow cylindrical PVC tube (which contains ferrite)
2) hollow cylindrical 20 mm PVC tube
3) cylindrical bar of ferrite or iron, 14 mm in diameter and up to 250 cm in length, which covers the whole length of the antenna and allows a magnetic field to be generated that increases the range of the wave fivefold.
4) 32 mm PVC tube, white or similar colour.
5) RG 58 or RG59 cable, white or similar colour.
6) side caps, of the same cross section.
7) two-component hardening resin

Transmission from this antenna enables the full amplitude of the wave to be generated from the start. The positive peak and the negative peak are generated in the same interval and with the same amplitude. As the wire is up to 4500 m in length, a wave of 4.5 km amplitude is generated in 250 cm of antenna.

Amplifier produces a frequency from 50 to 90 kHz, which is the same between 2000 and 4500 metres, and is proportional to the length of the enamelled copper wire; if it is 4500 metres long, it will produce a wave of 4500 metres in amplitude

The system contains a conventional electronic ultrasonic generator board (3.1) that can generate a sine-wave in a circular wave, performing a sweep with a range of frequencies of between 50 and 90 kHz in the area of the so-called ultrasounds. The generating equipment which is integrated on the electronic board is housed inside a watertight aluminium box. It is fitted with an incoming power supply (3.2) and a shielded cable output (5) to the antenna, as well as an LED light for plug connection indication.

This equipment uses electrical energy as a power supply, both that which comes from the conventional electricity grid and that which comes from solar energy, as it works with direct current. The electrical current is separated from the electronic board by means of a power supply, which has a transformer capable of isolating said current from the electronic circuit or generator. The signal generated runs through shielded cable (5) to the antenna element.

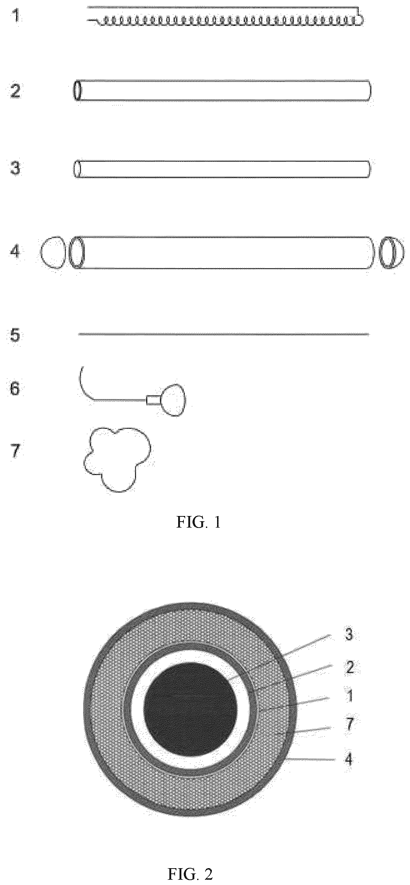

To better understand the above, an accompanying sheet of drawings can be found, in which there is a schematic representation of the antenna invention which, in reference to the above-mentioned drawing, is described in detail below. The antenna element (Figure 1) comprises the copper wire in a spiral, wound around the hollow tube (2). This houses a ferrite or iron bar or bars (3) inside it, with both ends sealed, ensuring that the interior is watertight. Item (4) acts as housing, as all the items described above are located inside it, and a shielded cable (5) exits from one of its ends, transporting the ultrasound signal produced by the generator equipment.

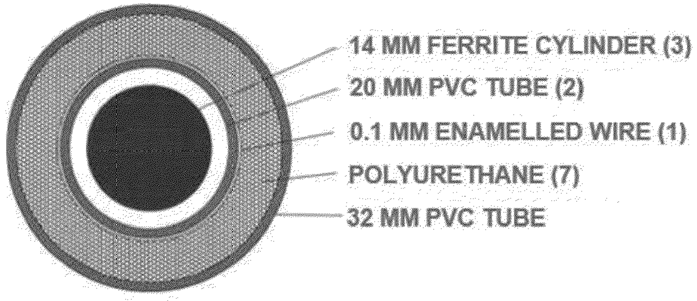

At one end of the tube, a cable gland is inserted in order to guide the shielded cable and make it watertight, and a blanking plug inserted at the opposite end.

This ballast (4) guarantees the immersion of the antenna in water at the desired position, facilitating the propagation of waves through the water and acting as an antenna.

The generator equipment, when powered by the electrical voltage and using its electrical circuits, generates a sine-wave that varies in frequency within a pre-set range. This signal, duly amplified and filtered, is transmitted through the antenna. The antenna element, located inside the watertight PVC tube (4) and submerged in the aquatic medium, generates an ultrasound signal that propagates through the aquatic medium in the form of vibration energy until it makes contact with the algae, producing harmful effects leading to its elimination. No effects harmful to other living beings have been detected.

Having sufficiently described the nature and scope of the present invention, as well as the method for putting it into practice, it must be noted that the materials, shapes, dimensions and in general all those accessories or secondary details may be variable and do not alter, change or modify the proposed essence.

The terms in which this report is drafted are a true and faithful reflection of the subject described and should be interpreted in its broadest sense and never restrictively.

In addition to the described antenna, this invention may be square or rectangular in shape, for smaller surfaces (pools) comprising: 1.- a base that is usually manufactured from reinforced fibreglass resin, ceramics, plastic, Teflon or polymers as the Bakelite on which some tracks of copper wire, enamelled on both sides of the plate without spaces between the wires and a length of wire inside it of up to 850 metres, approximately. Said board is also connected by an RG58 or RG59 d cable, or similar. Suction cups can be inserted onto this board in order to fix it to walls or the floor.

### DESCRIPTION OF THE DRAWINGS

Shows an image, in perspective, of 7 parts formed with different geometric figures. Making up the so-called ultrasound emitter antenna.
- Figure 1:: Shows a perspective of the components of the antenna:
1.- a coil of copper wire in a spiral, which simulates the winding of this wire onto a PVC tube until it reaches an approximate length of up to 4500 m.
2.- Shows a perspective of a hollow PVC tube, where the aforementioned wire will be wound.
3.-Shows the perspective of a ferrite or iron cylinder of 14 mm.
4.- Shows a perspective of a PVC tube made from white material, 32 mm in diameter, where all that which is described above will be located.
5.- Shows, in an illustrative manner, the RG 58 or RG59 cable which carries the signal from the electronic box to the described antenna.
6.- Represents the end caps and cable gland which go on either side of the figure described in figure 5.
7.- Represents the two-component polyurethane putty which covers all the above elements once they are assembled.
- Figure 2:: Shows the cross section of the antenna, with all the elements that it comprises.

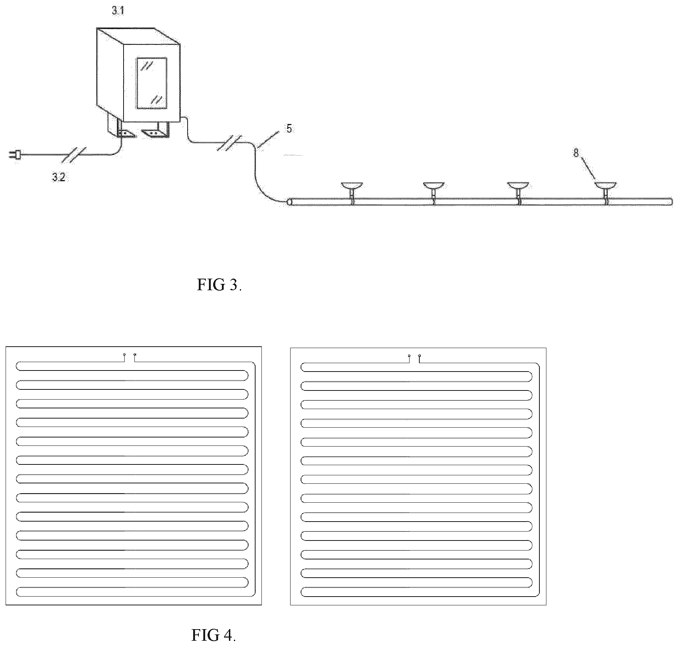

- Figure 3:: Shows the cross section of the antenna, with all the elements that it comprises.
- Figure 4:: Shows both sides of a possible square antenna shape, in perspective, where the tracks are made from enamelled copper wire of up to 850 meters, while the base is usually manufactured from glass reinforced fibre resins, ceramic, plastic, Teflon or polymers such as Bakelite.

### PREFERRED IMPLEMENTATION OF THE INVENTION

According to the figures provided and their numbering, we can see the preferred and non-restrictive completion of the invention, consisting of an antenna or reed made up of a ferrite or iron bar or bars (3) of up to 250 cm in length and imbued in a hollow PVC tube (2) of 20 mm in diameter and equivalent length, over which the 0.1 to 0.2 mm enamelled copper wire, of up to 2000 and 4500 (1) in length, is wound, all of which is imbued in a PVC hollow tube (4) of 32 mm diameter with both ends sealed, ensuring the watertight integrity of the interior. The PVC tube (4) acts as a housing, with all the items previously described located inside it. It is filled with two-component hardening resin (7) so that the antenna has consistency and is easily submerged. A shielded cable (5) comes out of one of its ends and transports the ultrasound signal produced by the equipment generator.

Some suction cups (8) can also be included on the antenna as an option, for attaching it to the wall

The cylindrical PVC pipes are preferably manufactured using the extrusion-blow moulding technique to enable the low-cost production of parts with relatively complex and irregular geometries, variable wall thicknesses, double layers, as well as the low-cost production of materials of high chemical resistance because it uses a single mould for processing the parts and because of the varied range of materials used for the construction of moulds that do not have to withstand high pressures.

## Claims

1. Ultrasonic wave antenna with emission of sine wave for the removal of algae and microorganisms **characterised by** generating the wave in its whole amplitude from the emitting source, the positive and negative peaks are generated at the same interval and with the same wave amplitude and frequency of 50 kHz to 90 kHz, which enables a 360° magnetic field to be generated with a single emitter kit that increases the range of the wave fivefold, being proportional to the length of enamelled copper cable (it is a single coil from start to finish). Being at least 4500 metres in length, it produces a wave of 4500 metres amplitude, which consists of:
• at least one enamelled copper wire, from 0.1 up to 0.2 mm, and up to approximately 2000 and 4500 metres in length, (with a non-restrictive extension),
• at least one hollow cylindrical PVC tube of 20 mm,
• a solid ferrite or iron cylindrical bar, 14mm in diameter, and
up to 250 cm in length, covering the full length of the antenna,
• at least one 32 mm PVC tube,
• cable RG58 Or RG59.
• two side covers, of the same cross section,
• two-component hardening resin.

2. Ultrasonic wave antenna for the elimination of algae and microorganisms, characterised, according to the first claim, by the fact that the 0.1 to 0.2 mm enamelled copper wire and its length of up to 2000 and 4500 metres, is rolled onto a coil, with no spaces in the rolled up wire, around the hollow tube (2) housed in the inside of a bar/bars of ferrite or iron (3) with both ends sealed, ensuring the watertight integrity of its interior.

3. Ultrasonic wave antenna for the elimination of algae and microorganisms characterised, according to the first claim, by the fact that all the components are housed in a PVC tube of 32 mm, which is filled with two-component hardening resin so that the antenna has consistency and is easily submerged.

4. Ultrasonic wave antenna for the elimination of algae and microorganisms **characterised by** the fact that, independent of the longitudinal form described in the claims above, the antenna can take on a square or rectangular shape for smaller surfaces (pools) which include: 1.- a board is manufactured from glass reinforced fibre resins, ceramics, plastic, Teflon or polymers such as Bakelite, onto which tracks of enamelled copper wire are inserted on both sides of the board, forming a kind of zig-zag without spaces between the wires, and an extension of the wire inside which can be up to 850 metres, approximately. Said board is also connected by an RG58 10 or RG59 d cable, or similar. Suction cups can be inserted onto this board in order to fix it to walls or the floor.
